(19) **Europäisches Patentamt / European Patent Office / Office européen des brevets**

(11) **EP 4 467 579 A1**

(12) # EUROPEAN PATENT APPLICATION
published in accordance with Art. 153(4) EPC

(43) Date of publication:
**27.11.2024 Bulletin 2024/48**

(21) Application number: **23743288.5**

(22) Date of filing: **18.01.2023**

(51) International Patent Classification (IPC):
**C08F 220/00** (2006.01)     **C08J 9/32** (2006.01)
**B01J 13/14** (2006.01)     **C09K 3/00** (2006.01)

(52) Cooperative Patent Classification (CPC):
**B01J 13/14; C08F 220/00; C08J 9/32; C09K 3/00**

(86) International application number:
**PCT/JP2023/001391**

(87) International publication number:
**WO 2023/140295 (27.07.2023 Gazette 2023/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.01.2022 JP 2022007976**
**02.02.2022 JP 2022015011**

(71) Applicant: **SEKISUI CHEMICAL CO., LTD.**
**Osaka-shi, Osaka 530-0047 (JP)**

(72) Inventors:
- **KAWAGUCHI, Yasuhiro**
  **Shunan-shi, Yamaguchi 746-0006 (JP)**
- **TAMURA, Kouji**
  **Shunan-shi, Yamaguchi 746-0006 (JP)**

(74) Representative: **Cabinet Beau de Loménie**
**158, rue de l'Université**
**75340 Paris Cedex 07 (FR)**

(54) **THERMALLY EXPANDABLE MICROCAPSULES, FOAMABLE RESIN COMPOSITION, AND FOAM**

(57)     The present invention provides a thermally expandable microcapsule that enables the production of a light molded article with high expansion ratio and excellent appearance, as well as a foamable resin composition and a foam that are produced using the thermally expandable microcapsule. Provided is a thermally expandable microcapsule including: a shell containing a polymer; and a volatile expansion agent as a core agent encapsulated by the shell, the shell containing silicon dioxide and a polymer obtained by polymerizing a monomer composition containing a carbonyl group-containing monomer, the thermally expandable microcapsule having a volatile content of 0.55% by weight or more and 2% by weight or less upon standing for one hour at a temperature of 70°C.

EP 4 467 579 A1

**Description**

TECHNICAL FIELD

The present invention relates to a thermally expandable microcapsule and also to a foamable resin composition and a foam that are produced using the thermally expandable microcapsule.

BACKGROUND ART

To reduce the weight and increase the functionality of resin materials, resin materials have been foamed using foaming agents. Typical foaming agents include thermally expandable microcapsules and chemical foaming agents.
A widely known thermally expandable microcapsule includes a thermoplastic shell polymer filled with a volatile expansion agent which turns into gas at a temperature not higher than the softening point of the shell polymer. For example, Patent Literature 1 discloses a method for producing a thermally expandable microcapsule filled with a volatile expansion agent, the method including: preparing an oily mixture liquid by mixing a monomer with a volatile expansion agent such as a low boiling point aliphatic hydrocarbon; and adding the oily mixture liquid and an oil-soluble polymerization catalyst to an aqueous dispersion medium containing a dispersant with stirring to perform suspension polymerization.

CITATION LIST

- Patent Literature

Patent Literature 1: JP S42-26524 B

SUMMARY OF INVENTION

- Technical Problem

However, when thermally expandable microcapsules produced by this method are used as a foaming agent, the resulting molded article may have defects such as depressions and thus have poor appearance.
Taking measures against such appearance defects may reduce the foaming performance and cause, for example, insufficient density of the resulting molded article.
The present invention aims to provide a thermally expandable microcapsule that enables the production of a light molded article with high expansion ratio and excellent appearance, as well as a foamable resin composition and a foam that are produced using the thermally expandable microcapsule.

- Solution to Problem

The present disclosure (1) relates to a thermally expandable microcapsule including: a shell containing a polymer; and a volatile expansion agent as a core agent encapsulated by the shell, the shell containing silicon dioxide and a polymer obtained by polymerizing a monomer composition containing a carbonyl group-containing monomer, the thermally expandable microcapsule having a volatile content of 0.55% by weight or more and 2% by weight or less upon standing for one hour at a temperature of 70°C.
The present disclosure (2) relates to the thermally expandable microcapsule according to the present disclosure (1), having a volatile content of 20% by weight or more and 30% by weight or less upon standing for 20 minutes at a temperature of 210°C.
The present disclosure (3) relates to the thermally expandable microcapsule according to the present disclosure (1) or (2), wherein a proportion of the volatile content upon standing for one hour at a temperature of 70°C to the volatile content upon standing for 20 minutes at a temperature of 210°C is 8% or less.
The present disclosure (4) relates to the thermally expandable microcapsule according to any one of the present disclosures (1) to (3), having a weight increase percentage of 60% by weight or less upon standing for 12 hours at a temperature of 50°C and a humidity of 80% or higher.
The present disclosure (5) relates to the thermally expandable microcapsule according to any one of the present disclosures (1) to (4), having an average particle size of 10 pm or greater and 45 pm or less.
The present disclosure (6) relates to the thermally expandable microcapsule according to any one of the present disclosures (1) to (5), having a maximum foaming temperature (Tmax) of 180°C or higher and 225°C or lower.
The present disclosure (7) relates to a foamable resin composition including: the thermally expandable microcapsule according to any one of the present disclosures (1) to (6); and a thermoplastic resin.

The present disclosure (8) relates to a foam produced using the foamable resin composition according to the present disclosure (7).

The present invention is described in detail below.

As a result of intensive studies, the present inventors have found out that the volatile content of the thermally expandable microcapsule is highly related to the properties of the resulting molded article.

The inventors thus adjusted the volatile content to a predetermined range in a thermally expandable microcapsule whose shell contains silicon dioxide and a polymer obtained by polymerizing a monomer composition containing a carbonyl group-containing monomer. The inventors have found out that such a thermally expandable microcapsule enables the production of a light molded article with high expansion ratio and excellent appearance. They thus completed the present invention.

The thermally expandable microcapsule of the present invention has a volatile content of 0.55% by weight or more and 2% by weight or less upon standing for one hour at a temperature of 70°C. With a volatile content of 0.55% by weight or more, the appearance of the molded article and the foamability can be both improved. With a volatile content of 2% by weight or less, particularly the appearance of the molded article can be improved.

Such a thermally expandable microcapsule is less likely to aggregate during foaming, and thus can contribute to improvement in foaming properties.

Moreover, such a thermally expandable microcapsule has excellent fluidity when many such microcapsules are aggregated, and thus can be stably fed through a hopper or the like during molding.

The lower limit of the volatile content upon standing for one hour at a temperature of 70°C is preferably 0.57% by weight, more preferably 0.6% by weight, and the upper limit thereof is preferably 1.8% by weight, more preferably 1.5% by weight.

The volatile content upon standing for one hour at a temperature of 70°C as used herein can be measured from the change in weight after heating for one hour in an oven at a temperature of 70°C and a humidity of lower than 20%. In this volatile content measurement, at a humidity of lower than 20%, the difference in change in weight due to the difference in humidity is small enough to be negligible.

In the present invention, the volatile content upon standing for one hour at a temperature of 70°C, as well as the volatile content upon standing for 20 minutes at a temperature of 210°C, the volatile content proportion, the weight increase percentage, and the average circularity, which are described later, can be controlled by adjusting the components of the thermally expandable microcapsule and adjusting the reaction step, the washing step, or the drying step in producing the thermally expandable microcapsule.

The thermally expandable microcapsule preferably has a volatile content of 20% by weight or more and 30% by weight or less upon standing for 20 minutes at a temperature of 210°C. When the volatile content is 20% by weight or more, sufficient foamability can be ensured. When the volatile content is 30% by weight or less, high appearance quality can be ensured when a foam molded article is formed using the thermally expandable microcapsule.

The lower limit of the volatile content upon standing for 20 minutes at a temperature of 210°C is more preferably 23% by weight, still more preferably 25% by weight, and the upper limit thereof is more preferably 28% by weight, still more preferably 27% by weight.

The volatile content upon standing for 20 minutes at a temperature of 210°C as used herein can be measured from the change in weight after heating for 20 minutes in an oven at a temperature of 210°C and a humidity of lower than 20%.

In the thermally expandable microcapsule of the present invention, a proportion of the volatile content upon standing for one hour at a temperature of 70°C to the volatile content upon standing for 20 minutes at a temperature of 210°C ([volatile content upon standing for one hour at temperature of 70°C]/[volatile content upon standing for 20 minutes at temperature of 210°C] $\times$ 100) is preferably 8% or less.

When the proportion is 8% or less, aggregation after foaming can be suppressed, leading to a foam molded article with good (smooth) appearance and high expansion ratio. The upper limit is more preferably 7.5%, still more preferably 5%, further preferably 3%. The preferable lower limit is not limited but is 0%.

The thermally expandable microcapsule of the present invention preferably has a weight increase percentage of 60% by weight or less upon standing for 12 hours at a temperature of 50°C and a humidity of 80% or higher. When the weight increase percentage is 60% by weight or less, the appearance of the foam molded article formed using the thermally expandable microcapsule can be improved.

The upper limit of the weight increase percentage is more preferably 50% by weight, still more preferably 35% by weight, and the lower limit thereof is preferably 10% by weight, more preferably 20% by weight.

The weight increase percentage as used herein can be measured from the change in weight after standing for 12 hours in a thermo-hygrostat at a temperature of 50°C and a humidity of 80% or higher. In this weight increase percentage measurement, at a humidity of 80% or higher, the difference in change in weight due to the difference in humidity is small enough to be negligible.

The lower limit of the maximum foaming temperature (Tmax) of the thermally expandable microcapsule of the present invention is preferably 180°C, and the upper limit thereof is preferably 225°C. The thermally expandable microcapsule having a maximum foaming temperature within the above range can have high heat resistance, so that breaking or shrinking of the thermally expandable microcapsule can be prevented when a composition containing the thermally expandable microcapsule is molded in a high-temperature range. In addition, such thermally expandable microcapsules are less likely to aggregate during molding, thus leading to good appearance. The lower limit is more preferably 185°C, still more preferably 190°C, and the upper limit is more preferably 222°C, still more preferably 220°C.

The maximum foaming temperature as used herein means a temperature at which the thermally expandable microcapsule reaches its maximum diameter (maximum displacement) when the diameter is measured while the microcapsule is heated from room temperature. The temperature at which the displacement begins to increase is defined as the foaming starting temperature.

The upper limit of the foaming starting temperature (Ts) is preferably 170°C. When the foaming starting temperature is 170°C or lower, foaming can be facilitated, and thus a desired expansion ratio can be achieved. The upper limit is more preferably 165°C, and the lower limit is preferably 145°C. The upper limit is more preferably 165°C.

The lower limit of the maximum displacement (Dmax) of the thermally expandable microcapsule of the present invention as measured by thermomechanical analysis is preferably 350 um, and the upper limit thereof is preferably 1,600 um. The lower limit is more preferably 500 um, and the upper limit is more preferably 1,500 um. When the maximum displacement (Dmax) is within the above range, the expansion ratio can be improved, and desired foaming properties can be obtained. The maximum displacement means the value of displacement at which a predetermined amount of thermally expandable microcapsules as a whole reaches the maximum diameter when the diameter of the predetermined amount of thermally expandable microcapsules is measured while the microcapsules are heated from room temperature.

The lower limit of the average particle size (volume average particle size) of the thermally expandable microcapsule of the present invention is preferably 10 um, and the upper limit thereof is preferably 45 um. When the average particle size is within the above range, the resulting molded article can have appropriate cells, a sufficient expansion ratio, and excellent appearance. The lower limit is more preferably 15 um, still more preferably 20 um, and the upper limit is more preferably 35 um, still more preferably 32 um, particularly preferably 30 um.

The thermally expandable microcapsule of the present invention preferably has a CV value of the volume average particle size of 35% or lower. The CV value is usually 10% or higher, preferably 15% or higher.

The average particle size (volume average particle size) and the CV value can be measured using a particle size distribution analyzer, for example.

The lower limit of the average circularity of the thermally expandable microcapsule of the present invention is preferably 0.910, and the upper limit thereof is preferably 0.980. When the average circularity is within the above range, the appearance upon molding can be smooth without depressions. The lower limit is more preferably 0.920, and the upper limit is more preferably 0.970.

The average circularity is determined, for example, by measuring the circularity from images obtained by wet measurement using Mastersizer 3000 (available from Malvern Panalytical) and calculating the average circularity. The circularity represents the value obtained by dividing the area calculated from an image of the thermally expandable microcapsule by the area of a circumcircle of the thermally expandable microcapsule (image area of thermally expandable microcapsule/area of circumcircle of thermally expandable microcapsule).

Alternatively, the average circularity may be determined by measuring the circularity from images obtained by dry measurement using CALPAS (available from Japan Laser Corporation) and calculating the average circularity.

The shell constituting the thermally expandable microcapsule of the present invention contains silicon dioxide and a polymer obtained by polymerizing a monomer composition containing a carbonyl group-containing monomer.

The shell contains silicon dioxide.

The silicon dioxide may be attached to a surface of the shell or may be mixed in the shell. Here, the silicon dioxide encompasses silicon dioxide hydrate.

Examples of the silicon dioxide include silicon dioxide contained in silica fine particles and silicon dioxide contained in colloidal silica.

The colloidal silica is colloid of silicon dioxide or silicon dioxide hydrate.

The colloidal silica containing silicon dioxide preferably has an average particle size of 10 to 300 nm.

The lower limit of the amount of the silicon dioxide in the thermally expandable microcapsule of the present invention is preferably 1% by weight, and the upper limit thereof is preferably 5% by weight. When the amount of the silicon dioxide is 1% by weight or more, the average particle size of the thermally expandable microcapsule can be stably maintained. When the amount of the silicon dioxide is 5% by weight or less, a thermally expandable microcapsule with excellent foaming properties can be obtained. The lower limit of the amount of the silicon dioxide is more preferably 1.5% by weight, and the upper limit thereof is more preferably 3% by weight. The lower limit is still more preferably 1.7% by weight, and the upper limit is still more preferably 2.8% by weight.

The shell contains silicon dioxide and a polymer obtained by polymerizing a monomer composition containing a carbonyl group-containing monomer.

Examples of the carbonyl group-containing monomer include a C3-C8 radically polymerizable unsaturated carboxylic acid monomer, a C3-C8 radically polymerizable unsaturated carboxylate monomer, and a polyfunctional carboxylate monomer.

Examples of the C3-C8 radically polymerizable unsaturated carboxylic acid monomer include those having one free carboxy group per molecule for ionic crosslinking.

Specific examples of such monomers include unsaturated carboxylic acids and anhydrides thereof. These may be used alone or in combination of two or more thereof.

Examples of unsaturated carboxylic acids include unsaturated monocarboxylic acids such as acrylic acid, methacrylic acid, ethacrylic acid, crotonic acid, and cinnamic acid, and unsaturated dicarboxylic acids such as maleic acid, itaconic acid, fumaric acid, citraconic acid, and chloromaleic acid.

Particularly preferred among these are acrylic acid, methacrylic acid, maleic acid, maleic anhydride, and itaconic acid.

The lower limit of the amount of the C3-C8 radically polymerizable unsaturated carboxylic acid monomer in the monomer composition is preferably 5% by weight, and the upper limit thereof is preferably 50% by weight. When the amount is 5% by weight or more, the maximum foaming temperature can be increased. When the amount is 50% by weight or less, the expansion ratio can be improved. The lower limit is preferably 10% by weight, and the upper limit is preferably 30% by weight.

The C3-C8 radically polymerizable unsaturated carboxylate monomer is preferably, for example, (meth)acrylate, particularly preferably alkyl methacrylate such as methyl methacrylate, ethyl methacrylate, or n-butyl methacrylate. Also preferred are alicyclic methacrylates, aromatic ring-containing methacrylates, and heterocyclic ring-containing methacrylates, such as cyclohexyl methacrylate, benzyl methacrylate, and isobornyl methacrylate.

The lower limit of the amount of the C3-C8 radically polymerizable unsaturated carboxylate monomer in the monomer composition is preferably 0.01% by weight, and the upper limit thereof is preferably 35% by weight. When the amount of the C3-C8 radically polymerizable unsaturated carboxylate monomer is 0.01% by weight or more, the dispersibility of a composition containing the thermally expandable microcapsule can be improved. When the amount is 35% by weight or less, the gas barrier properties of the cell wall can be improved, so that thermal expandability can be improved. The lower limit of the amount of the C3-C8 radically polymerizable unsaturated carboxylate monomer is more preferably 0.05% by weight, and the upper limit thereof is more preferably 30% by weight.

The polyfunctional carboxylate monomer refers to a carboxylate monomer containing two or more radically polymerizable double bonds, and differs from the C3-C8 radically polymerizable unsaturated carboxylate monomer.

The polyfunctional carboxylate monomer functions as a cross-linking agent. The polyfunctional carboxylate monomer contained can enhance the strength of the shell, so that the cell wall can be less likely to break during thermal expansion.

Specific examples of the polyfunctional carboxylate monomer include di(meth)acrylates and tri- or higher functional (meth)acrylates.

Examples of di(meth)acrylates include ethylene glycol di(meth)acrylate, diethylene glycol di(meth)acrylate, triethylene glycol di(meth)acrylate, propylene glycol di(meth)acrylate, and 1,4-butanediol di(meth)acrylate. Examples also include 1,6-hexanediol di(meth)acrylate, 1,9-nonanediol di(meth)acrylate, glycerol di(meth)acrylate, trimethylolpropane di(meth)acrylate, and dimethylol-tricyclodecane di(meth)acrylate. Di(meth)acrylate of polyethylene glycol having a weight average molecular weight of 200 to 600 may also be used.

Examples of trifunctional (meth)acrylates include trimethylolpropane tri(meth)acrylate, ethylene oxide-modified trimethylolpropane tri(meth)acrylate, pentaerythritol tri(meth)acrylate, and triallylformal tri(meth)acrylate. Examples of tetra- or higher functional (meth)acrylates include pentaerythritol tetra(meth)acrylate and dipentaerythritol hexa(meth)acrylate.

Of these, trifunctional (meth)acrylates such as trimethylolpropane tri(meth)acrylate and bifunctional (meth)acrylates such as polyethylene glycol provide relatively uniform crosslinking in a shell mainly containing acrylonitrile.

The lower limit of the amount of the polyfunctional carboxylate monomer in the monomer composition is preferably 0.1% by weight, and the upper limit thereof is preferably 1.0% by weight. When the amount of the polyfunctional carboxylate monomer is 0.1% by weight or more, the polyfunctional carboxylate monomer can sufficiently exhibit effects as a cross-linking agent. When the amount of the polyfunctional carboxylate monomer is 1.0% by weight or less, the expansion ratio of the thermally expandable microcapsule can be improved. The lower limit of the amount of the polyfunctional carboxylate monomer is more preferably 0.15% by weight, and the upper limit thereof is more preferably 0.9% by weight.

The monomer composition preferably contains a nitrile monomer such as acrylonitrile or methacrylonitrile in addition to the carbonyl group-containing monomer.

Adding the nitrile monomer can improve the gas barrier properties of the shell.

The monomer composition may also contain vinylidene chloride, divinylbenzene, vinyl acetate, a styrene monomer, and/or the like in addition to the carbonyl group-containing monomer and the nitrile monomer.

The lower limit of the amount of the nitrile monomer in the monomer composition is preferably 40% by weight, and the upper limit thereof is preferably 90% by weight. When the amount is 40% by weight or more, the gas barrier properties of the shell can be increased and thus the expansion ratio can be improved. When the amount is 90% by weight or less, heat resistance can be improved, and yellowing can be prevented. The lower limit is more preferably 50% by weight and the upper limit is more preferably 80% by weight.

In particular, from the viewpoint of heat resistance, expansion ratio, lightness, hardness, and abrasion resistance, the monomer composition preferably contains the nitrile monomer in an amount of 40 to 90% by weight and the carbonyl group-containing monomer in an amount of 10 to 60% by weight.

The monomer composition contains a polymerization initiator for polymerization of the monomers.

Examples of suitable polymerization initiators include dialkyl peroxides, diacyl peroxides, peroxy esters, peroxydicarbonates, and azo compounds.

Specific examples include: dialkyl peroxides such as methyl ethyl peroxide, di-t-butyl peroxide, and dicumyl peroxide; and diacyl peroxides such as isobutyl peroxide, benzoyl peroxide, 2,4-dichlorobenzoyl peroxide, and 3,5,5-trimethylhexanoyl peroxide.

Examples also include t-butyl peroxypivalate, t-hexyl peroxypivalate, t-butyl peroxyneodecanoate, t-hexyl peroxyneodecanoate, 1-cyclohexyl-1-methylethyl peroxyneodecanoate, and 1,1,3,3-tetramethylbutyl peroxyneodecanoate.

Examples also include: peroxy esters such as cumyl peroxyneodecanoate and ($\alpha$,$\alpha$-bis-neodecanoylperoxy) diisopropylbenzene; bis(4-t-butylcyclohexyl)peroxydicarbonate; di-n-propyl-oxydicarbonate; and diisopropyl peroxydicarbonate.

Examples also include peroxydicarbonates such as di(2-ethylethylperoxy)dicarbonate, dimethoxybutyl peroxydicarbonate, and di(3-methyl-3-methoxybutylperoxy)dicarbonate.

Examples also include azo compounds such as 2,2'-azobisisobutyronitrile, 2,2'-azobis(4-methoxy-2,4-dimethylvaleronitrile), 2,2'-azobis(2,4-dimethylvaleronitrile), and 1,1'-azobis(1-cyclohexanecarbonitrile).

The lower limit of the weight average molecular weight of the polymer constituting the shell is preferably 100,000, and the upper limit thereof is preferably 2,000,000. When the weight average molecular weight is 100,000 or greater, the shell strength is less likely to decrease. When the weight average molecular weight is 2,000,000 or less, the shell strength is less likely to excessively increase, so that the expansion ratio is less likely to decrease.

The shell may further contain an additive such as a stabilizer, an ultraviolet absorber, an antioxidant, an antistatic agent, a flame retardant, a silane coupling agent, or a colorant, if necessary.

The thermally expandable microcapsule of the present invention includes a volatile expansion agent as a core agent encapsulated by the shell.

The volatile expansion agent is a substance that becomes gaseous at a temperature not higher than the softening point of the polymer constituting the shell. The volatile expansion agent is preferably a low-boiling-point organic solvent.

Examples of the volatile expansion agent include low molecular weight hydrocarbons such as ethane, ethylene, propane, propene, n-butane, isobutane, butene, isobutene, n-pentane, isopentane, neopentane, n-hexane, heptane, petroleum ether, isooctane, octane, decane, isododecane, dodecane, and hexandecane.

Examples also include: chlorofluorocarbons such as $CCl_3F$, $CCl_2F_2$, $CClF_3$, and $CClF_2$-$CClF_2$; and tetraalkylsilanes such as tetramethylsilane, trimethylethylsilane, trimethylisopropylsilane, and trimethyl-n-propylsilane. In particular, isobutane, n-butane, n-pentane, isopentane, n-hexane, isooctane, isododecane, and mixtures of these are preferred. These volatile expansion agents may be used alone or in combination of two or more.

The volatile expansion agent used may be a heat-decomposable compound that is heat-decomposed into a gaseous form by heat.

For the thermally expandable microcapsule of the present invention, among the above volatile expansion agents, a low-boiling-point hydrocarbon having a carbon number of 5 or less is preferably used. Use of such a hydrocarbon enables the production of a thermally expandable microcapsule that has high expansion ratio and that starts expanding quickly.

The volatile expansion agent used may be a heat-decomposable compound that is heat-decomposed into a gaseous form by heat.

The method of producing the thermally expandable microcapsule of the present invention is not limited. For example, the thermally expandable microcapsule may be produced through the steps of: preparing an aqueous medium; dispersing, in the aqueous medium, an oily mixture liquid containing the monomer composition and the volatile expansion agent; and polymerizing the monomers.

For example, the monomer composition used may be the above-described composition containing the nitrile monomer in an amount of 40 to 90% by weight and the carbonyl group-containing monomer in an amount of 10 to 60% by weight.

To produce the thermally expandable microcapsule of the present invention, first, the step of preparing an aqueous medium is performed. Specifically, for example, a polymerization reaction vessel is charged with water, a dispersion stabilizer containing silicon dioxide, and if necessary an auxiliary stabilizer, to prepare an aqueous dispersion medium containing silicon dioxide. If necessary, alkali metal nitrite, stannous chloride, stannic chloride, potassium dichromate, or the like may also be added.

Examples of the dispersion stabilizer containing silicon dioxide include colloidal silica.

The colloidal silica may be alkaline colloidal silica which is a colloidal solution (aqueous dispersion) having a pH higher than 7, or may be acidic colloidal silica having a pH lower than 7. In particular, alkaline colloidal silica is more preferred.

The colloidal silica preferably contains silicon dioxide as a solid component in an amount of 10 to 50% by weight and is preferably monodispersed.

Examples of dispersion stabilizers other than the silicon dioxide include calcium phosphate, magnesium hydroxide, aluminum hydroxide, ferric hydroxide, barium sulfate, calcium sulfate, sodium sulfate, calcium oxalate, calcium carbonate, barium carbonate, and magnesium carbonate.

The amount of the dispersion stabilizer containing silicon dioxide to be added is appropriately determined according to the particle size of the thermally expandable microcapsule. The lower limit of the amount relative to 100 parts by weight of the oily mixture liquid (oil phase) is preferably 2.5 parts by weight, and the upper limit thereof is preferably 7 parts by weight. The lower limit is still more preferably 3 parts by weight, and the upper limit is still more preferably 5 parts by weight. The amount of the oil phase means the total amount of the monomers and the volatile expansion agent.

Examples of the auxiliary stabilizer include a condensation product of diethanolamine and an aliphatic dicarboxylic acid, and a condensation product of urea and formaldehyde. Examples also include polyvinylpyrrolidone, polyethylene oxide, polyethyleneimine, tetramethylammonium hydroxide, gelatin, methylcellulose, polyvinyl alcohol, dioctyl sulfosuccinate, sorbitan esters, and various emulsifiers.

Examples of the combination of the dispersion stabilizer and the auxiliary stabilizer include, but not limited to, a combination of colloidal silica and a condensation product and a combination of colloidal silica and a water-soluble nitrogen-containing compound. Preferred among these is a combination of colloidal silica and a condensation product.

The condensation product is preferably a condensation product of diethanolamine and an aliphatic dicarboxylic acid, particularly preferably a condensation product of diethanolamine and adipic acid or a condensation product of diethanolamine and itaconic acid.

Examples of the water-soluble nitrogen-containing compound include polyvinylpyrrolidone, polyethyleneimine, polyoxyethylenealkylamine, and polydialkylaminoalkyl (meth)acrylate typified by polydimethylaminoethyl methacrylate and polydimethylaminoethyl acrylate. Examples also include polydialkylaminoalkyl(meth)acrylamides typified by polydimethylaminopropylacrylamide and polydimethylaminopropylmethacrylamide, polyacrylamide, cationic polyacrylamide, polyamine sulfone, and polyallylamine. Among these, polyvinylpyrrolidone is suitably used.

The amount of the condensation product or the water-soluble nitrogen-containing compound is appropriately determined according to the particle size of the thermally expandable microcapsule. The lower limit of the amount relative to 100 parts by weight of the oily mixture liquid is preferably 0.05 parts by weight, and the upper limit thereof is preferably 0.2 parts by weight.

In addition to the dispersion stabilizer and the auxiliary stabilizer, an inorganic salt such as sodium chloride and sodium sulfate may be further added. Adding an inorganic salt allows the thermally expandable microcapsule to have a more uniform particle shape. The amount of the inorganic salt to be added is usually preferably 0 to 100 parts by weight relative to 100 parts by weight of the monomers.

The aqueous dispersion medium containing the dispersion stabilizer is prepared by mixing the dispersion stabilizer and the auxiliary stabilizer in deionized water. The pH of the aqueous phase at this time is appropriately determined according to the types of the dispersion stabilizer and auxiliary stabilizer used. For example, when the dispersion stabilizer used is silicon dioxide, an acidic medium is used for polymerization. The aqueous medium may be made acidic by optionally adding an acid such as hydrochloric acid to adjust the system to a pH of 3 to 4. When the dispersion stabilizer used is magnesium hydroxide or calcium phosphate, an alkaline medium is used for polymerization.

In the method of producing the thermally expandable microcapsule, next, the step of dispersing, in the aqueous medium, an oily mixture liquid containing the monomer composition and the volatile expansion agent is performed.

Specifically, for example, an oily mixture liquid containing the above-described monomer composition containing the nitrile monomer in an amount of 40 to 90% by weight and the carbonyl group-containing monomer in an amount of 10 to 60% by weight and the volatile expansion agent is dispersed in the aqueous medium. In this step, the monomer composition and the volatile expansion agent may be separately added to the aqueous dispersion medium to prepare the oily mixture liquid in the aqueous dispersion medium. Typically, however, they are mixed in advance to form the oily mixture liquid, and the obtained oily mixture liquid is added to the aqueous dispersion medium. In this case, the oily mixture liquid and the aqueous dispersion medium may be prepared in separate containers in advance, and mixed in another container with stirring to disperse the oily mixture liquid in the aqueous dispersion medium (primary dispersion), and then added to the polymerization reaction vessel.

The monomers are polymerized using a polymerization initiator. The polymerization initiator may be added to the oily mixture liquid in advance, or may be added after the aqueous dispersion medium and the oily mixture liquid are mixed with stirring in the polymerization reaction vessel.

In the step of dispersing the oily mixture liquid containing the monomer composition and the volatile expansion agent in the aqueous medium, the oily mixture liquid and the aqueous medium may be stirred with an impeller (e.g., retreat impeller), a batch type high-speed rotary high-shear disperser (e.g., JP H07-96167 A), or a continuous type high-speed rotary high-shear disperser (e.g., JP 2000-191817 A). Alternatively, the oily mixture liquid and the aqueous medium may be passed through a tubular dispersion apparatus such as a line mixer or a static mixer.

In the present invention, in the step of dispersing the oily mixture liquid containing the monomer composition and the volatile expansion agent in the aqueous medium, the oily mixture liquid is preferably dispersed using a static mixer. A static mixer enables mixing in a tube instead of a bath and also enables static mixing without an impeller, thus enabling suitable production of the thermally expandable microcapsule of the present invention. At this time, preferably, the oily mixture liquid and the aqueous dispersion medium are prepared in advance in separate containers, mixed to prepare a primary dispersion, and then the primary dispersion is fed to the static mixer under pressure.

The static mixer includes multiple sheet elements, each having many holes, mounted in a tube that is open at both ends. The sheet elements are placed on top of each other such that in at least one set of adjacent sheet elements, the centers of the holes of the adjacent sheet elements do not align with each other but the openings of the holes at least partially face each other.

Through such a step, the thermally expandable microcapsule of the present invention can be suitably produced. The pressure is preferably 1 to 6 MPa.

The number of holes in the elements is preferably adjusted according to the amount of flow.

The pressure can be set by adjusting the hole size and the flow rate. The hole size is preferably 1 to 3 mm. The flow rate is preferably 100 to 500 L/min. Specifically, a combination of a hole size of 2 mm and a flow rate of 200 L/min is suitable, for example.

The thermally expandable microcapsule of the present invention can be produced by performing the step of polymerizing the monomers by heating the dispersion obtained through the above steps, and a washing step. The thermally expandable microcapsule produced by such a method has a high maximum foaming temperature and excellent heat resistance, and neither breaks nor shrinks during molding in a high temperature range.

In the method of producing the thermally expandable microcapsule of the present invention, a washing step is performed.

The washing step may be performed by a method such as immersion washing, washing with running water, or shower washing, or a method combining any of these with ultrasound or oscillation.

The washing step may be performed in combination with a dehydrating step to improve production efficiency. Specifically, the following method may be used.

The slurry is fed to a compression dehydrator and pressed into wet cake. A predetermined amount of washing water (preferably ion-exchanged water) is then fed to the dehydrator, and the wet cake is pressed again. Washing water is then fed and the cake is pressed again. This process is repeated several times. The amounts of slurry and washing water fed to the dehydrator, the ratio between the amounts, and the number of washings at this time are important for removal of inorganic salts such as sodium chloride or sodium sulfate.

This step can remove inorganic salts, making it possible to prevent corrosion of equipment in semiconductor applications or automobile component applications (molding applications).

The amount (volume) of washing water in the washing step is preferably 2.5 to 5 times the amount of the polymerized slurry.

In the method of producing the thermally expandable microcapsule of the present invention, a drying step is then performed.

The drying step is for vaporizing liquid components. The drying step also can adjust the amount of silicon dioxide in the shell.

The drying step can be performed by a method such as natural drying, hot air drying (fluid bed drying), and vacuum drying.

The drying temperature is preferably 30°C or higher, more preferably 32°C or higher, still more preferably 35°C or higher and is preferably 70°C or lower, more preferably 68°C or lower, still more preferably 65°C or lower.

The drying time (total drying time) in the drying step is preferably 12 hours or longer, more preferably 13 hours or longer, more preferably 14 hours or longer and is preferably 20 hours or shorter, more preferably 18 hours or shorter.

In the drying step, drying may be performed at a constant temperature, or the drying temperature may be gradually changed.

When the drying temperature is gradually changed, the drying step may be divided into multiple steps.

At this time, it is preferred to perform two to four drying steps, more preferably three drying steps (first to third drying steps). In this case, the first drying step is preferably performed at an average drying temperature of 40°C or lower. The second drying step is preferably performed at an average drying temperature of higher than 40°C and 50°C or lower. The third drying step is preferably performed at an average drying temperature of higher than 50°C.

The drying method is particularly preferably vacuum drying. In this case, a heat vacuum vibration dryer may be used, for example.

In the vacuum drying, the vacuum value is preferably within the range from -0.065 to -0.100 MPa, more preferably from -0.070 to -0.095 MPa, still more preferably from - 0.075 to -0.090 MPa. The vacuum value can be measured with a vacuum manometer or a vacuum gauge.

A foamable resin composition can be obtained by adding a matrix resin such as a thermoplastic resin to the thermally expandable microcapsule of the present invention. Alternatively, a masterbatch pellet can be obtained by mixing the thermally expandable microcapsule of the present invention and a base resin such as a thermoplastic resin.

A foam can be produced by adding a matrix resin such as a thermoplastic resin to the masterbatch pellet to produce a foamable resin composition, molding the composition by a molding method such as injection molding, and then foaming the thermally expandable microcapsule by heating in the molding.

The foamable resin composition of the present invention preferably contains 0.1 to 10 parts by weight of the thermally expandable microcapsule relative to 100 parts by weight of the matrix resin.

The foamable resin composition may contain a chemical foaming agent.

The chemical foaming agent may be any chemical forming agent that is powdery at room temperature, and a conventionally widely used chemical foaming agent can be used.

Chemical foaming agents are classified into organic foaming agents and inorganic foaming agents, which are both further classified into heat-decomposable foaming agents and reactive foaming agents.

Examples of organic heat-decomposable foaming agents that are often used include azodicarbonamide (ADCA), N,N'-dinitropentamethylenetetramine (DPT), and 4,4'-oxybisbenzenesulfonylhydrazide (OBSH).

Examples of inorganic heat-decomposable foaming agents include hydrogencarbonates, carbonates, and combinations of hydrogencarbonates and organic acid salts. The chemical foaming agent is preferably a heat-decomposable chemical foaming agent. The performance of a heat-decomposable chemical foaming agent depends on the decomposition temperature, the amount of gas generated therefrom, and the particle size.

The decomposition temperature of the chemical foaming agent is preferably 180°C to 200°C.

The decomposition temperature can be adjusted by using a urea or zinc foaming aid in combination with the chemical foaming agent as necessary.

The amount of gas generated from the chemical foaming agent is preferably 220 to 240 ml/g. The amount of gas generated is the volume of gas generated when the chemical foaming agent decomposes. This gas, which fills the cells, affects the expansion ratio.

Using the chemical foaming agent in combination with a citric acid salt or zinc oxide can decrease the cell size.

The chemical foaming agent is usually powder. The smaller the particle size of the powder, the larger the number of particles per unit weight. The larger the number of particles, the larger the number of generated cells tends to be.

The lower limit of the average particle (median size) size of the chemical foaming agent is preferably 4 um, and the upper limit thereof is preferably 20 um. When the average particle size is within the above range, the resulting molded article can have appropriate cells, a sufficient expansion ratio, and excellent appearance. The lower limit is more preferably 5 um, and the upper limit is more preferably 10 $\mu$m.

The method of molding the foam molded article is not limited. Examples thereof include knead molding, calender molding, extrusion molding, and injection molding. The injection molding may be performed by any method. Examples of the method include a short shot method, in which part of a resin material is placed in a mold and foamed, and a core back method, in which a mold is fully filled with a resin material and then opened enough to achieve a desired foam size.

- Advantageous Effects of Invention

The present invention aims to provide a thermally expandable microcapsule that enables the production of a light molded article with high expansion ratio and excellent appearance, as well as a foamable resin composition and a foam that are produced using the thermally expandable microcapsule. The thermally expandable microcapsule of the present invention can be suitably used in automobile components, coating materials, adhesives, and inks.

DESCRIPTION OF EMBODIMENTS

Embodiments of the present invention are more specifically described in the following with reference to, but not limited to, examples.

(Example 1)

(Production of thermally expandable microcapsules)

An amount of 330 parts by weight (average particle size 20 nm) of colloidal silica having a solid content of 20% by weight, 12 parts by weight of polyvinylpyrrolidone, 1,096 parts by weight of sodium chloride, and 0.85 parts by weight of sodium nitrite were mixed with 3,300 parts by weight of ion-exchanged water, whereby an aqueous dispersion medium was prepared. The colloidal silica (aqueous dispersion) used was alkaline colloidal silica.

An amount of 390 parts by weight (28% by weight) of acrylonitrile, 585 parts by weight (42% by weight) of methacrylonitrile, 420 parts by weight (29.9% by weight) of methacrylic acid, and 1.4 parts by weight (0.1% by weight) of methyl methacrylate were mixed to prepare a monomer composition (the values in the parentheses are percentages by weight relative to the entire monomer composition) as a homogenous solution. To this composition were added 11.1 parts by weight of 2,2'-azobis(isobutyronitrile), 8.3 parts by weight of 2,2'-azobis(4-methoxy-2,4-dimethylvaleronitrile), and 440 parts by weight of n-pentane. They were then charged into a tank 1 and mixed.

Subsequently, the aqueous dispersion medium was charged into a tank 2, to which the oily mixture in the tank 1 was added, followed by mixing. Thus, a primary dispersion was obtained. The primary dispersion had a pH of 3.5 to 4.0. The obtained primary dispersion was passed through a static mixer (produced by Fujikin Incorporated, Bunsankun) at a flow rate of 200 L/min and a pressure of 1.5 MPa. The liquid after passing through the mixer was charged into an autoclave.

The element-type static disperser used had a shape tapered in the middle and included sheet elements each having a thickness of 5 mm, an effective diameter of 15 mm, and a hole size of 2 mm. The number of holes at least partially facing each other in adjacent sheet elements of different types was 78. The number of units each composed of a first element and a second element was 10. The units were set such that the primary dispersion as a fluid passed through the holes of each sheet element.

After nitrogen purging, reaction was performed at a reaction temperature of 60°C for 15 hours. The reaction pressure was set to 0.5 MPa, and the stirring was performed at 200 rpm.

Thereafter, 8,000 L of the obtained polymerized slurry was fed in portions to a compression dehydrator (produced by Ishigaki Company, Ltd., Filter Press). After dehydration, a predetermined amount of washing water was fed to the dehydrator to perform a washing step. Thus, undried thermally expandable microcapsules were obtained. The washing step was performed using 1,000 L of washing water relative to 300 L of the polymerized slurry.

The obtained undried thermally expandable microcapsules were vacuum dried (total drying time: 12.5 hours, vacuum value: -0.085 MPa) using a heat vacuum vibration dryer (available from Chuo Kakohki Co., Ltd, VU model), whereby thermally expandable microcapsules were obtained.

Specifically, the vacuum drying was performed by drying at set temperatures of 45°C, 50°C, and 55°C (each at a temperature increase rate of 10°C/hr) for 5.5 hours (first drying step), followed by drying at set temperatures of 60°C and 65°C (each at a temperature increase rate of 10°C/hr) for 1.5 hours (second drying step). Subsequently, after a temperature increase at 5°C/hr, drying was performed at a set temperature of 70°C, a drying temperature (initial) of 43°C, and a drying temperature (final) of 60°C for 5.5 hours (third drying step). The set temperatures refer to the set temperatures of the jacket of the dryer. The drying time refers to the actual drying time. Tables 2 and 3 show the drying temperature and time at each set temperature.

(Production of foam precursor)

Materials were mixed at the formulation shown in Table 1 in a Henschel mixer (dry up at 120°C), whereby a foamable resin composition was obtained.

The obtained foamable resin composition (300 g) was heat-kneaded with an 8-inch lab roll mill for three minutes. The roll temperature was lower than the foaming starting temperature by 30°C to 50°C.

Subsequently, the rolled sheet after kneading was used as a material and molded with a press machine at the same temperature setting as the rolls into a pressed sheet (foam precursor) with a thickness of 1 to 2 mm, a length of 150 mm, and a width of 150 mm. The press conditions were as follows: preheating for three minutes, pressing for three minutes, and cooling for three minutes. The surface pressure in preheating was 5 to 8 MPa, and the surface pressure in pressing and cooling was 20 MPa.

(Examples 2 to 6 and Comparative Examples 1 to 6)

Thermally expandable microcapsules and a foam precursor were obtained as in Example 1, except that the obtained undried thermally expandable microcapsules were subjected to the drying and washing steps under the drying conditions (first to third drying steps, total drying time, vacuum value) and washing conditions (amount of washing water relative to 300 L of the polymerized slurry) shown in Tables 2 and 3.

(Comparative Example 7)

(Production of thermally expandable microcapsules)

An amount of 330 parts by weight (average particle size 20 nm) of colloidal silica having a solid content of 20% by weight, 12 parts by weight of polyvinylpyrrolidone, 1,096 parts by weight of sodium chloride, and 0.85 parts by weight of sodium nitrite were mixed with 3,300 parts by weight of ion-exchanged water, whereby an aqueous dispersion medium was prepared. The colloidal silica (aqueous dispersion) used was alkaline colloidal silica.

An amount of 978 parts by weight (70% by weight) of acrylonitrile and 418 parts by weight (30% by weight) of methacrylonitrile were mixed to prepare a monomer composition (the values in the parentheses are percentages by weight relative to the entire monomer composition) as a homogenous solution. To this composition were added 11.1 parts by weight of 2,2'-azobis(isobutyronitrile), 8.3 parts by weight of 2,2'-azobis(2,4-dimethylvaleronitrile), and 440 parts by weight of n-pentane. They were then charged into a tank 1 and mixed.

Subsequently, the aqueous dispersion medium was charged into a tank 2, to which the oily mixture in the tank 1 was added, followed by mixing. Thus, a primary dispersion was obtained. The primary dispersion had a pH of 3.5 to 4.0. The obtained primary dispersion was passed through a static mixer (produced by Fujikin Incorporated, Bunsankun) at a flow rate of 200 L/min and a pressure of 1.5 MPa. The liquid after passing through the mixer was charged into an autoclave.

The element-type static disperser used had a shape tapered in the middle and included sheet elements each having a thickness of 5 mm, an effective diameter of 15 mm, and a hole size of 2 mm. The number of holes at least partially facing each other in adjacent sheet elements of different types was 78. The number of units each composed of a first element and a second element was 10. The units were set such that the primary dispersion as a fluid passed through the holes of each sheet element.

After nitrogen purging, reaction was performed at a reaction temperature of 60°C for 15 hours. The reaction pressure was set to 0.5 MPa, and the stirring was performed at 200 rpm.

Thereafter, 8,000 L of the obtained polymerized slurry was fed in portions to a compression dehydrator (produced by Ishigaki Company, Ltd., Filter Press). After dehydration, a predetermined amount of washing water was fed to the dehydrator to perform a washing step. Thus, undried thermally expandable microcapsules were obtained. The washing step was performed using 1,000 L of washing water relative to 300 L of the polymerized slurry.

Thermally expandable microcapsules and a foam precursor were obtained as in Example 1, except that the obtained undried thermally expandable microcapsules were subjected to the drying and washing steps under the drying conditions (first to third drying steps, total drying time, vacuum value) and washing conditions (amount of washing water relative to 300 L of the polymerized slurry) shown in Tables 2 and 3.

[Table 1]

| | | | Addition amount | | |
|---|---|---|---|---|---|
| | | | Examples 1 to 6 Comparative Examples 1 to 6 | Comparative Example 7 | |
| Thermally expandable microcapsule | Nitrile monomer | Acrylonitrile | 28 | 70 | % by weight in monomers |
| | | Methacrylonitrile | 42 | 30 | |
| | Carbonyl group-containing monomer | Methacrylic acid | 29.9 | 0 | |
| | | Methyl methacrylate | 0.1 | 0 | |
| | Volatile expansion agent | n-Pentane | 29.8 | 29.8 | % by weight relative to monomers |
| | Polymerization initiator | 2,2'-Azobisisobutyronitrile | 0.8 | 0.8 | |
| | | 2,2'-Azobis(4-methoxy-2,4-dimethylvaleronitrile) | 0.6 | 0.6 | |

(continued)

| | | | Addition amount | | |
|---|---|---|---|---|---|
| | | | Examples 1 to 6 Comparative Examples 1 to 6 | Comparative Example 7 | |
| Foamable resin composition | Thermoplastic resin | Polyvinyl chloride resin (PVC) | 100 | | Addition amount relative to 100 parts by weight of PVC (parts by weight) |
| | Chemical foaming agent | Calcium carbonate | 30 | | |
| | Plasticizer | DOP | 33 | | |
| | Thermal stabilizer | Tin stabilizer | 1.5 | | |
| | Foaming agent | Thermally expandable microcapsule | 5 | | |

(1) Evaluation of thermally expandable microcapsules

(1-1) Foaming starting temperature, maximum foaming temperature, maximum displacement

The foaming starting temperature (Ts), maximum displacement (Dmax), and maximum foaming temperature (Tmax) were measured with a thermomechanical analyzer (TMA) (TMA2940, produced by TA Instruments). Specifically, 25 $\mu$g of a sample was placed in an aluminum container having a diameter of 7 mm and a depth of 1 mm, and heated at a temperature increase rate of 5°C/min from 80°C to 220°C with a force of 0.1 N applied from the top. The displacement was measured in the perpendicular direction of a measuring terminal. The temperature at which the displacement began to increase was defined as the foaming starting temperature. The maximum value of the displacement was defined as the maximum displacement. The temperature at which the maximum displacement was obtained was defined as the maximum foaming temperature.

(1-2) Average particle size (volume average particle size) and average circularity

The volume average particle size was measured using a particle size distribution analyzer (LA-950, available from HORIBA Ltd.). The average circularity was determined by the above-described method from images obtained by wet measurement using Mastersizer 3000 (available from Malvern Panalytical).

(1-3) Volatile content (one hour at 70°C, 20 minutes at 210°C)

About 10 g of the thermally expandable microcapsules were weighed into an aluminum cup, heated at 70°C for one hour, allowed to cool to 40°C or below in a desiccator, and weighed. The volatile content was calculated by the formula below.
The volatile content after heating for 20 minutes at 210°C was also measured in the same manner. The proportion of the volatile content upon standing for one hour at a temperature of 70°C to the volatile content upon standing for 20 minutes at a temperature of 210°C ([volatile content upon standing for one hour at temperature of 70°C]/[volatile content upon standing for 20 minutes at temperature of 210°C] × 100) was calculated.

$$V = [(B - C)/(B - A)] \times 100$$

V: Volatile content (% by weight)
A: Weight (g) of aluminum cup
B: Weight (g) of the aluminum cup containing the sample
C: Weight (g) of the aluminum cup containing the sample after heating and cooling

(1-4) Weight increase percentage

The volatile content before and after standing for 12 hours at a temperature of 50°C and a humidity of 80% or higher was measured by the same method as for "one hour at 70°C" in (1-3). The weight increase percentage was determined by the following formula.

$$D = (E - F)/E \times 100$$

D: Weight increase percentage
E: Volatile content after standing for 12 hours at a temperature of 50°C and a humidity of 80% or higher
F: Volatile content before standing for 12 hours at a temperature of 50°C and a humidity of 80% or higher

(1-5) $SiO_2$ content

A slight amount (about 0.01 g) of the thermally expandable microcapsules were collected, and the $SiO_2$ content (amount of silicon dioxide in the thermally expandable microcapsules) was measured using an energy dispersive X-ray spectrometer (EDS) (JSM-6510, available from JEOL Ltd.).

(1-6) Degree of aggregation during foaming of thermally expandable microcapsules

The thermally expandable microcapsules (0.05 g) were weighed into an aluminum cup and left to stand for 1.5 minutes at 200°C. Then, the degree of aggregation of the foamed thermally expandable microcapsules was determined with a microscope. The degree of aggregation was evaluated as "None" when no aggregation was observed, "Aggregated" when slight aggregation was observed, or "Strongly aggregated" when most of the thermally expandable microcapsules were aggregated.

(1-7) Hopper fluidity

A container for measuring bulk specific gravity specified in JIS K7370 was used. The obtained thermally expandable microcapsules were fed to the upper part of a hopper, and then allowed to fall by their own weight. The number of seconds at which the hopper was emptied (all the thermally expandable microcapsules fell down) was measured.

(2) Evaluation of foam (molded article)

(2-1) Appearance (number of depressions)

The obtained pressed sheet (foam precursor) was placed on a Teflon® sheet and heated in a gear oven at 200°C for 10 minutes to foam the thermally expandable microcapsules. After 10 minutes, the foam sample was taken out of the gear oven, left to cool for 30 minutes or longer. The appearance of the cooled foam sample was observed, and the number of depressions was counted from the protrusions and depressions on the surface. The observation of the appearance was not performed on the foam precursor obtained in Comparative Example 7 because the obtained foam had a density higher than 1 g/cm3.

(2-2) Density measurement

The density of the obtained foam (density after foaming) was measured by a method in conformity with JIS K-7112 A method (water displacement method).

[Table 2]

| Drying conditions | | | Example | | | | | | Comparative Example | | | | | | |
|---|---|---|---|---|---|---|---|---|---|---|---|---|---|---|---|
| | | | 1 | 2 | 3 | 4 | 5 | 6 | 1 | 2 | 3 | 4 | 5 | 6 | 7 |
| Drying conditions | First drying step | Drying temperature (°C) | 37 to 41 | 37 to 41 | 36 to 41 | 34 to 40 | 34 to 40 | 35 to 40 | 34 to 40 | 34 to 40 | 34 to 40 | 34 to 40 | 34 to 40 | 70 | 37 to 41 |
| | | Average drying temperature | 40 | 40 | 39 | 37 | 37 | 38 | 37 | 37 | 37 | 37 | 37 | 70 | 40 |
| | | Drying time (hr) | 5.5 | 4.5 | 5.5 | 6.5 | 6 | 5.1 | 3 | 4 | 3 | 6 | 6 | 16 | 5.5 |
| | | Temperature increase rate (°C/hr) | 10 | 10 | 10 | 10 | 10 | 10 | 10 | 10 | 10 | 10 | 10 | 10 | 10 |
| | Second drying step | Drying temperature (°C) | 40 to 43 | 40 to 43 | 40 to 43 | 40 to 44 | 40 to 43 | 40 to 44 | 40 to 44 | 40 to 44 | 40 to 58 | 40 to 58 | 40 to 58 | - | 40 to 43 |
| | | Average drying temperature | 42 | 42 | 42 | 43 | 42 | 42 | 42 | 42 | 50 | 50 | 50 | - | 42 |
| | | Drying time (hr) | 1.5 | 2 | 1.5 | 2 | 33 | 4.2 | 3 | 4.5 | 12 | 6.5 | 7.5 | - | 1.5 |
| | | Temperature increase rate (°C/hr) | 10 | 10 | 10 | 10 | 10 | 10 | 10 | 10 | 10 | 10 | 10 | - | 10 |
| | Third drying step | Drying temperature (°C) | 43 to 60 | 43 to 61 | 43 to 61 | 44 to 60 | 45 to 60 | 44 to 60 | 44 to 60 | 44 to 60 | - | - | 75 | - | 43 to 60 |
| | | Average drying temperature | 52 | 53 | 53 | 52 | 52 | 51 | 52 | 52 | - | - | 75 | - | 52 |
| | | Drying time (hr) | 5.5 | 75 | 7.5 | 7 | 65 | 65 | 9 | 11 | - | - | 6.5 | - | 5.5 |
| | | Temperature increase rate (°C/hr) | 5 | 5 | 5 | 5 | 5 | 5 | 5 | 5 | - | - | - | - | 5 |
| | Total drying time (hr) | | 12.5 | 140 | 14.5 | 15.5 | 15.8 | 15.8 | 150 | 19.5 | 150 | 12.5 | 20.0 | 16.0 | 12.5 |
| | Degree of vacuum (MPa) | | -0.085 | -0.085 | -0.085 | -0.085 | -0.085 | -0.075 | -0.085 | -0.075 | -0.085 | -0.085 | -0.085 | -0.085 | -0.085 |
| Washing conditions | Amount of washing water | (L) | 1000 | 800 | 1000 | 800 | 800 | 800 | 600 | 400 | 300 | 600 | 600 | 600 | 1000 |

EP 4 467 579 A1

14

| | | | Example | | | | | | Comparative Example | | | | | | |
|---|---|---|---|---|---|---|---|---|---|---|---|---|---|---|---|
| | | | 1 | 2 | 3 | 4 | 5 | 6 | 1 | 2 | 3 | 4 | 5 | 6 | 7 |
| Evaluation (microcapsule) | Physical properties | Ts(°C) | 162 | 162 | 163 | 162 | 163 | 162 | 164 | 163 | 164 | 167 | 163 | 163 | 135 |
| | | Tmax (°C) | 201 | 200 | 202 | 202 | 202 | 200 | 202 | 201 | 201 | 202 | 202 | 200 | 175 |
| | | Dmax(Nm) | 1400 | 1361 | 1211 | 1016 | 969 | 1030 | 742 | 920 | 756 | 655 | 780 | 650 | 900 |
| | | Average particle size ($\mu$m) | 29.0 | 31.1 | 29.5 | 30.5 | 31.0 | 30.5 | 29.5 | 30.5 | 30.3 | 29.5 | 31.2 | 30.6 | 29.5 |
| | | Average circularity | 0.931 | 0.910 | 0.915 | 0.926 | 0.905 | 0.909 | 0.781 | 0.744 | 0.786 | 0.791 | 0.819 | 0.756 | 0.868 |
| | | $SiO_2$ content (wt%) | 1.88 | 2.69 | 2.32 | 2.22 | 1.57 | 1.63 | 2.26 | 2.22 | 2.69 | 2.32 | 1.27 | 1.44 | 3.05 |
| | Volatile content | 70°C, 1 hr (A) | 0.61 | 0.72 | 0.78 | 1.20 | 1.51 | 1.91 | 3.02 | 2.50 | 3.44 | 8.01 | 0.51 | 0.46 | 0.85 |
| | | 210°C, 20 min (B) | 26.5 | 26.2 | 26.1 | 26.5 | 26.0 | 27.0 | 27.1 | 26.5 | 27.2 | 33.5 | 24.8 | 24.9 | 27 |
| | | A/B * 100 (%) | 2.3 | 2.7 | 30 | 4.5 | 5.8 | 7.1 | 11.1 | 9.4 | 126 | 23.9 | 2.1 | 1.8 | 31 |
| | | Increase percentage (%) | 57.9 | 53.5 | 57.8 | 42.9 | 29.8 | 26.5 | 32.9 | 26.5 | 37.5 | 11.0 | 79.6 | 81.6 | 41.4 |
| | Properties | Degree of aggregation during foaming | None | None | None | None | None | None | Aggregated | Aggregated | Aggregated | Strongly aggregated | None | None | None |
| | | Fall from hopper (sec) | 4.97 | 5.1 | 5.05 | 5.2 | 5.25 | 5.45 | 6.05 | 5.85 | 6.55 | Did not fall | 4.45 | 5.5 | 5.5 |
| Evaluation (molded article) | Appearance | Number of depressions (depressions/900 m²) | 0 | 0 | 0 | 0 | 0 | 0 | 5 (Foaming aggregates of microcapsules) | 2 | 5 | 7 | 3 | 5 | No observation performed |
| | Foamability | Density (g/cm³) | 0.65 | 0.64 | 0.66 | 0.68 | 0.69 | 0.68 | 0.71 | 0.66 | 0.715 | 0.74 | 0.735 | 0.78 | 1.05 |

EP 4 467 579 A1

15

[Table 3]

| | | Set temperature (°C) | Drying temperature (°C) | Time (Hr) | | | Set temperature (°C) | Drying temperature (°C) | Time (Hr) |
|---|---|---|---|---|---|---|---|---|---|
| Example 1 | First drying step | 45 | 37 to 38 | 3 | Comparative Example 1 | First drying step | 40 | 34 to 36 | 1 |
| | | 50 | 39 to 40 | 1 | | | 45 | 36 to 38 | 1 |
| | | 55 | 40 to 41 | 1.5 | | | 50 | 38 to 40 | 1 |
| | Second drying step | 60 | 40 to 43 | 1 | | Second drying step | 55 | 40 to 44 | 1 |
| | | 65 | | 0.5 | | | 60 | | 1 |
| | Third drying step | 70 | 43 to 60 | 5.5 | | | 65 | | 1 |
| Example 2 | First drying step | 40 | 37 | 1.5 | | Third drying step | 70 | 44 to 60 | 9 |
| | | 45 | 37 to 40 | 1 | Comparative Example 2 | First drying step | 40 | 34 to 36 | 1.5 |
| | | 50 | 41 | 2 | | | 45 | 36 to 38 | 1.5 |
| | Second drying step | 55 | 40 to 43 | 0.5 | | | 50 | 38 to 40 | 1 |
| | | 60 | | 0.5 | | Second drying step | 55 | 40 to 44 | 2 |
| | | 65 | | 1 | | | 60 | | 1.5 |
| | Third drying step | 70 | 43 to 61 | 7.5 | | | 65 | | 1 |
| Example 3 | First drying step | 40 | 36 to 37 | 2 | | Third drying step | 70 | 44 to 60 | 11 |
| | | 45 | 37 to 40 | 1 | Comparative Example 3 | First drying step | 40 | 34 to 36 | 1 |
| | | 50 | 41 | 2.5 | | | 45 | 36 to 38 | 1 |
| | Second drying step | 55 | 40 to 43 | 0.5 | | | 50 | 38 to 40 | 1 |
| | | 60 | | 0.5 | | Second drying step | 55 | 40 to 58 | 1 |
| | | 65 | | 0.5 | | | 60 | | 11 |

(continued)

**Example 4**

| Step | Set temperature (°C) | Drying temperature (°C) | Time (Hr) |
|---|---|---|---|
| Third drying step | 70 | 43 to 61 | 7.5 |
| First drying step | 40 | 34 to 36 | 2 |
| | 45 | 36 to 38 | 1 |
| | 50 | 38 to 40 | 3.5 |
| Second drying step | 55 | 40 to 44 | 0.5 |
| | 60 | | 0.5 |
| | 65 | | 1 |
| Third drying step | 70 | 44 to 60 | 7 |
| First drying step | 40 | 34 to 37 | 1.5 |
| | 45 | 39 | 0.5 |
| | 50 | 40 | 4 |

| Group | Step | Set temperature (°C) | Drying temperature (°C) | Time (Hr) |
|---|---|---|---|---|
| | Third drying step | - | - | - |
| Comparative Example 4 | First drying step | 45 | 34 to 38 | 4 |
| | | 50 | 38 to 40 | 2 |
| | | 55 | 40 to 58 | 1 |
| | Second drying step | 60 | | 5.5 |
| | Third drying step | - | - | - |
| Comparative Example 5 | First drying step | 45 | 34 to 38 | 4 |
| | | 50 | 38 to 40 | 2 |
| | | 55 | 40 to 58 | 1 |
| | Second drying step | 60 | | 5.5 |
| | | 65 | | 1 |

(continued)

| | | Set temperature (°C) | Drying temperature (°C) | Time (Hr) |
|---|---|---|---|---|
| Example 5 | Second drying step | 55 | 40 to 43 | 2.3 |
| | | 60 | | 0.5 |
| | | 65 | | 0.5 |
| | Third drying step | 70 | 45 to 60 | 6.5 |
| Example 6 | First drying step | 40 | 35 to 37 | 2 |
| | | 45 | 37 to 40 | 0.5 |
| | | 50 | 38 to 40 | 2.6 |
| | Second drying step | 55 | 40 to 44 | 3.2 |
| | | 60 | | 0.5 |
| | | 65 | | 0.5 |
| | Third drying step | 70⇒67 | 44 to 60 | 6.5 |

| | | Set temperature (°C) | Drying temperature (°C) | Time (Hr) |
|---|---|---|---|---|
| | Third drying step | 80 | 75 | 6.5 |
| Comparative Example 6 | First drying step | 75 | 70 | 16 |
| Comparative Example 7 | First drying step | 45 | 37 to 38 | 3 |
| | | 50 | 39 to 40 | 1 |
| | | 55 | 40 to 41 | 1.5 |
| | Second drying step | 60 | 40 to 43 | 1 |
| | | 65 | | 0.5 |
| | Third drying step | 70 | 43 to 60 | 5.5 |

INDUSTRIAL APPLICABILITY

The present invention can provide a thermally expandable microcapsule that enables the production of a light molded article with high expansion ratio and excellent appearance, as well as a foamable resin composition and a foam that are produced using the thermally expandable microcapsule.

**Claims**

1. A thermally expandable microcapsule comprising:

   a shell containing a polymer; and
   a volatile expansion agent as a core agent encapsulated by the shell,
   the shell containing silicon dioxide and a polymer obtained by polymerizing a monomer composition containing a carbonyl group-containing monomer,
   the thermally expandable microcapsule having a volatile content of 0.55% by weight or more and 2% by weight or less upon standing for one hour at a temperature of 70°C.

2. The thermally expandable microcapsule according to claim 1, having a volatile content of 20% by weight or more and 30% by weight or less upon standing for 20 minutes at a temperature of 210°C.

3. The thermally expandable microcapsule according to claim 1 or 2,
   wherein a proportion of the volatile content upon standing for one hour at a temperature of 70°C to the volatile content upon standing for 20 minutes at a temperature of 210°C is 8% or less.

4. The thermally expandable microcapsule according to any one of claims 1 to 3, having a weight increase percentage of 60% by weight or less upon standing for 12 hours at a temperature of 50°C and a humidity of 80% or higher.

5. The thermally expandable microcapsule according to any one of claims 1 to 4, having an average particle size of 10 pm or greater and 45 pm or less.

6. The thermally expandable microcapsule according to any one of claims 1 to 5, having a maximum foaming temperature (Tmax) of 180°C or higher and 225°C or lower.

7. A foamable resin composition comprising:

   the thermally expandable microcapsule according to any one of claims 1 to 6; and
   a thermoplastic resin.

8. A foam produced using the foamable resin composition according to claim 7.

## INTERNATIONAL SEARCH REPORT

International application No.

**PCT/JP2023/001391**

### A.  CLASSIFICATION OF SUBJECT MATTER

*C08F 220/00*(2006.01)i; *C08J 9/32*(2006.01)i; *B01J 13/14*(2006.01)i; *C09K 3/00*(2006.01)i
FI:   C09K3/00 111B; B01J13/14; C08F220/00; C08J9/32 CEZ

According to International Patent Classification (IPC) or to both national classification and IPC

### B.  FIELDS SEARCHED

Minimum documentation searched (classification system followed by classification symbols)

C08F220/00; C08J9/32; B01J13/14; C09K3/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.  DOCUMENTS CONSIDERED TO BE RELEVANT

| Category* | Citation of document, with indication, where appropriate, of the relevant passages | Relevant to claim No. |
|---|---|---|
| X | JP 2020-045485 A (SEKISUI CHEMICAL CO LTD) 26 March 2020 (2020-03-26)<br>claims 1-10, paragraph [0008], examples: thermally expandable microcapsules 1-4,<br>examples 1-8, tables 1-2, etc. | 1-8 |
| X | JP 2012-067181 A (SEKISUI CHEMICAL CO LTD) 05 April 2012 (2012-04-05)<br>claims 1-7, paragraph [0010], examples 1-7, table 1, etc. | 1-8 |
| A | WO 2020/158613 A1 (SEKISUI CHEMICAL CO LTD) 06 August 2020 (2020-08-06)<br>claims | 1-8 |

☐ Further documents are listed in the continuation of Box C.     ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **04 April 2023** | **11 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/001391**

| Patent document cited in search report | | | Publication date (day/month/year) | Patent family member(s) | | | Publication date (day/month/year) |
|---|---|---|---|---|---|---|---|
| JP | 2020-045485 | A | 26 March 2020 | (Family: none) | | | |
| JP | 2012-067181 | A | 05 April 2012 | (Family: none) | | | |
| WO | 2020/158613 | A1 | 06 August 2020 | US<br>claims<br>EP<br>CN<br>TW | 2022/0119614<br><br>3892654<br>113272341<br>202039666 | A1<br><br>A1<br>A<br>A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S4226524 B
- JP H0796167 A
- JP 2000191817 A